# EUROPÄISCHE PATENTANMELDUNG

(11) **EP 3 828 750 A1**
(43) Veröffentlichungstag der Anmeldung: **02.06.2021**
(21) Anmeldenummer: 20209874.5
(22) Anmeldetag: 25.11.2020
(51) Int. Cl.: G06F 30/12, G05B 19/4097, G06F 30/23, G06F 111/04, G06F 111/20

(54) **VERFAHREN ZUR ERSTELLUNG EINES BLOCKSCHALTBILDES UND VOR-RICHTUNG ZUR SIMULATION**

(30) Priorität: 26.11.2019 DE 102019218272
(71) Anmelder: ISG Industrielle Steuerungstechnik GmbH, 70563 Stuttgart (DE)
(72) Erfinder: Dr. Scheifele, Christian, 70173 Stuttgart (DE)
(74) Vertreter: Kohler Schmid Möbus Patentanwälte

(57) **Zusammenfassung**

Bei der Erstellung eines Blockschaltbildes wird ein Anschluss einer ersten 3D-Darstellung (18) mit zumindest einem Anschluss einer zweiten 3D-Darstellung (26, 30.1) verbunden und zumindest ein Anschluss eines ersten Blockschaltelements (20) wird mit einem Anschluss eines zweiten Blockschaltelements (28, 31.1) verbunden. Die Blockschaltelemente (20, 28, 31.1) werden bevorzugt automatisch platziert. Es ist auch möglich, die Blockschaltelemente (20, 18, 31.1) manuell mit 3D-Darstellungen zu verbinden.

## Beschreibung

### Hintergrund der Erfindung

Die Erfindung betrifft ein Verfahren zur Erstellung eines Blockschaltbildes einer realen Maschine und / oder Anlage aus einzelnen Blockschaltelementen sowie eine Vorrichtung zur Simulation einer Maschine und / oder Anlage mit mehreren Maschinenkomponenten und/oder Anlagekomponenten. Eine Maschine bezeichnet dabei eine Maschine zur Bearbeitung von Werkstücken. Eine Anlage umfasst in der Regel mehrere Maschinen und/oder weitere Komponenten wie Förderbänder, Werkstückquellen, Werkstücksenken etc.

Ein Blockschaltbild ist ein grafischer Modellierungsansatz zur Abbildung der Wirkstruktur eines dynamischen Systems. Das Blockschaltbild beschreibt dabei aus welchen Teilsystemen sich ein System zusammensetzt und wie die Teilsysteme über ihre Anschlüsse durch Signale verkoppelt sind.

In DE10231675A1 wird ein System und Verfahren zur Konstruktion und Auslegung von Produktionsmaschinen beschrieben. Hierfür werden Simulationsdaten eines Mechanikmodells der Produktionsmaschine verwendet.

Aus der DE102006059829A1 ist ein Universalcomputer bekannt geworden.

### Aufgabe der Erfindung

Demgegenüber ist es Aufgabe der Erfindung, den Entwurfsprozess und/oder Modellierungsprozess einer Maschine und / oder Anlage zu vereinfachen und/oder zu beschleunigen.

### Beschreibung der Erfindung

Diese Aufgabe wird erfindungsgemäß gelöst durch ein Verfahren gemäß Anspruch 1 sowie Vorrichtung gemäß Anspruch 6. Die abhängigen Ansprüche geben vorteilhafte Aus- und Weiterbildungen der Erfindung an.

Bei einem Verfahren zum Erstellen eines Blockschaltbildes aus einzelnen Blockschaltelementen wird in einem Schritt A) eine erste 3D-Darstellung einer ersten realen Anlagekomponente in einem Arbeitsraum platziert. Der Arbeitsraum ist ein dafür vorgesehener Bereich einer grafischen Benutzeroberfläche. Das Platzieren in diesem Schritt erfolgt bevorzugt durch einen Benutzer über die grafische Benutzeroberfläche. Die erste 3D-Darstellung gibt bevorzugt das Äußere der realen Anlagekomponente realitätsgetreu in dreidimensionaler Darstellung in dem Arbeitsraum auf einem Bildschirm oder ähnlichem wieder.

In einem Schritt B) wird zumindest ein erstes Blockschaltelement in einer Zeichenebene platziert. Die Zeichenebene ist ein dafür vorgesehener Bereich einer grafischen Benutzeroberfläche und wird bevorzugt auf einem Bildschirm oder ähnlichem wiedergegeben. In diesem Schritt erfolgt das Platzieren automatisch, d. h. automatisiert, z. B. durch einen Rechner, im Hintergrund. Das zumindest eine erste Blockschaltelement repräsentiert dabei die erste 3D-Darstellung. Das mindestens eine erste Blockschaltelement repräsentiert dabei das Verhalten der ersten Anlagekomponente in Blockschaltelementdarstellung.

Das zumindest eine erste Blockschaltelement wird beim Platzieren der ersten 3D-Darstellung automatisch in der Zeichenebene platziert. Es ist mit der ersten 3D-Darstellung logisch verbunden. Ein Blockschaltelement kann hierarchisch auch mehrere Blockschaltelemente enthalten. Optional kann das Verhalten der ersten Anlagekomponente durch mehr als ein Blockschaltelement repräsentiert werden.

In einem Schritt C) wird eine zweite 3D-Darstellung einer zweiten realen Anlagekomponente in dem Arbeitsraum platziert. Die zweite 3D-Darstellung gibt bevorzugt das Äußere der zweiten realen Anlagekomponente realitätsgetreu in dreidimensionaler Darstellung in dem Arbeitsraum auf einem Bildschirm oder ähnlichem wieder.

In einem Schritt D) wird zumindest ein zweites Blockschaltelement in der Zeichenebene platziert. Das zumindest eine zweite Blockschaltelement repräsentiert dabei die zweite 3D-Darstellung. Das mindestens eine zweite Blockschaltelement repräsentiert dabei das Verhalten der zweiten Anlagekomponente in Blockschaltelementdarstellung.

Das zumindest eine zweite Blockschaltelement wird beim Platzieren der zweiten 3D-Darstellung automatisch in der Zeichenebene platziert. Es ist mit der zweiten 3D-Darstellung logisch verbunden. Ein Blockschaltelement kann hierarchisch auch mehrere Blockschaltelemente enthalten. Optional kann das Verhalten der zweiten Anlagekomponente durch mehr als ein Blockschaltelement repräsentiert werden.

Durch das Platzieren der zweiten 3D-Darstellung im Arbeitsraum wird zumindest ein Anschluss der zweiten 3D-Darstellung mit zumindest einem Anschluss der ersten 3D-Darstellung verbunden. Ein Anschluss der 3D-Darstellung im Zusammenhand mit dieser Erfindung ist ein Kontaktpunkt (engl. Docking Point) der 3D-Darstellung. Die 3D-Darstellungen werden zudem mit ihrer Geometrie realitätsgenau im Arbeitsraum platziert. Durch das Platzieren des zumindest einen zweiten Blockschaltelements im Zeichenbereich wird ein Anschluss des zumindest einen zweiten Blockschaltelements mit einem Anschluss des zumindest einen ersten Blockschaltelements verbunden. Das Verbinden der Blockschaltelemente kann dabei durch das Zeichnen von Strichen im Zeichenbereich erfolgen oder aber durch entsprechende Kennzeichnung der Anschlüsse. Ein Anschluss besteht aus ein oder mehreren Signaleingängen und/oder ein oder mehreren Signalausgängen mit Parametrierung eines Blockschaltelements. Beispielsweise müssen mehrere Förderbänder nicht zwangsläufig im Blockschaltbild über Signale verbunden werden, die geometrische Verbindung kann über die 3D-Modelle gefunden werden. 3D-Darstellungen, die z. B. Sensoren oder Aktoren repräsentieren, werden dagegen über ein Signal im Blockschaltbild gekoppelt, da ihre Wechselwirkung mit anderen Komponenten über die reine Geometrie hinausgeht.

Das Blockschaltbild bietet dabei eine verständliche Modellierung des Verhaltens der Anlagekomponenten durch eine vereinfachende Beschreibung. Einzelne Blockschaltelemente untereinander können über ihre Anschlüssen, also ihre Ein- und Ausgängen, miteinander verbunden werden. Komplexe Modelle können auf Basis einfacher Grundmodelle leicht verständlich modelliert und parametriert werden. Blockschaltbild-Modelle können auf Basis einer formalen Sprache, wie z.B. durch XML (Extensible Markup Language), dargestellt werden. Diese Darstellung kann wiederum unter anderem die Basis für eine automatische Generierung eines Verhaltensmodells virtueller Produktionsanlagen bilden. Das Simulationsmodell einer realen Anlage unterteilt sich in ein Verhaltensmodell und in ein Geometriemodell, welche zusammen die virtuelle Produktionsanlage darstellen. Das Blockschaltbild stellt dabei das Verhaltensmodell dar. Die 3D-Darstellung stellt dabei das Geometriemodell dar.

In einer Ausführungsform der Erfindung ist das Verbinden der ersten 3D-Darstellung mit der zweiten 3D-Darstellung mittels einer sogenannten Drag & Drop Funktion ausführbar. Beim Drag & Drop, deutsch "Ziehen und Ablegen", wird eine grafische Benutzeroberflächen von Rechnern durch das Bewegen grafischer Elemente mittels eines Zeigegerätes bedient. Die zweite 3D-Darstellung kann damit gezogen und über dem Ziel, also der ersten 3D-Darstellung, losgelassen werden. Hierdurch kann die Verbindung zwischen den 3D-Modellen hergestellt werden. Insbesondere kann eine realitätsgetreue geometrische Anordnung der 3D-Darstellungen zueinander erreicht werden. In einer Ausführungsform kann über das Drag & Drop automatisch das mit der ersten und/oder zweiten 3D-Darstellung verbundene Blockschaltelement in der Zeichenebene platziert werden.

In einer Ausführungsform wird das ziehbare Element, also die zweite 3D-Darstellung, in seiner Bewegung beim Ziehen eingeschränkt, so dass es in einer vorgegebenen Position einrastet, engl. "to snap". Die Position, in der die zweite 3D-Darstellung einrastet ist dabei die Position benachbart zur ersten 3D-Darstellung, so dass aus den 3D-Darstellungen ein Abbild der realen Anlage, bestehend aus den Anlagekomponenten, die durch die 3D-Darstellungen repräsentiert werden, erstellt werden kann.

Das Platzieren der ersten 3D-Darstellung in Schritt A) und/oder das Platzieren der zweiten 3D-Darstellung in Schritt C) kann insbesondere auch durch den Import von geometrischen Daten aus einem Konstruktionssystem, z. B. CAD-System, erfolgen. Für eine solche Ausführungsform ist es vorteilhaft, das Blockschaltelement manuell mit der 3D-Darstellung zu verknüpfen. Nach der manuellen Verknüpfung kann das Blockschaltelement dann in den Schritten B) und/oder D) in der Zeichenebene platziert werden.

Die Auswahl des mindestens einen ersten Blockschaltelements automatischen Platzieren erfolgt in Schritt B) auf Basis einer in einem Speicher gespeicherten Beziehung zwischen der ersten 3D-Darstellung und dem mindestens einen ersten Blockschaltelement. Diese Beziehung kann darin bestehen, dass die erste 3D-Darstellung und das mindestens eine erste Blockschaltbild zusammengehören. Die Beziehung zwischen der ersten 3D-Darstellung und dem mindestens einen ersten Blockschaltelement kann dabei vorgebbar, insbesondere fest vorgebbar, sein. Die Beziehung zwischen der ersten 3D-Darstellung und dem mindestens einen ersten Blockschaltelement kann auch durch einen Nutzer vorgebbar sein. Dies ist insbesondere der Fall, wenn der Nutzer nach Platzieren der ersten 3D-Darstellung mindestens ein erstes Blockschaltelement mit der ersten 3D-Darstellung durch Bedienvorgänge verknüpft.

In einer Ausführungsform erfolgt die Auswahl des mindestens einen zweiten Blockschaltelements zum automatischen Platzieren in Schritt D) auf Basis einer in einem Speicher gespeicherten Beziehung zwischen der zweiten 3D-Darstellung und dem mindestens einen zweiten Blockschaltelement. Diese Beziehung kann darin bestehen, dass die zweite 3D-Darstellung und das mindestens eine zweite Blockschaltbild zusammengehören. Die Beziehung zwischen der zweiten 3D-Darstellung und dem mindestens einen zweiten Blockschaltelement kann dabei vorgebbar, insbesondere fest vorgebbar, sein. Die Beziehung zwischen der zweiten 3D-Darstellung und dem mindestens einen zweiten Blockschaltelement kann auch durch einen Nutzer vorgebbar sein. Dies ist insbesondere der Fall, wenn der Nutzer nach Platzieren der zweiten 3D-Darstellung mindestens ein zweites Blockschaltelement mit der zweiten 3D-Darstellung durch Bedienvorgänge verknüpft.

Eine Vorrichtung zur Simulation einer Anlage, insbesondere einer realen Produktionsanlage, mit mehreren Anlagekomponenten, ist ausgebildet, das Simulationsmodell der Anlage auszuführen, d. h. zu simulieren, und auf der grafischen Benutzeroberfläche darzustellen. Das Simulationsmodell unterteilt sich in ein Verhaltensmodell und in ein Geometriemodell, welche zusammen die virtuelle Produktionsmaschine und/oder Produktionsanlage darstellen. Das Blockschaltbild stellt dabei das Verhaltensmodell dar. Die 3D-Darstellung stellt dabei das Geometriemodell dar. Auf der grafischen Benutzeroberfläche der Vorrichtung zur Simulation kann dabei die Simulation sowohl im Geometriemodell, 3D-Darstellung, als auch im Verhaltensmodell, Blockschaltbild, grafisch visualisiert werden.

Die Vorrichtung stellt eine erste 3D-Darstellung einer ersten realen Anlagenkomponente in einem Arbeitsraum und zumindest ein erstes Blockschaltelement in einer Zeichenebene dar. Das zumindest eine erste Blockschaltelement repräsentiert die erste 3D-Darstellung. Die Vorrichtung stelle außerdem eine zweite 3D-Darstellung einer zweiten realen Anlagenkomponente im Arbeitsraum und zumindest ein zweites Blockschaltelement in der Zeichenebene dar. Das zumindest eine zweite Blockschaltelement repräsentiert die zweite 3D-Darstellung. Ein Anschluss der ersten 3D-Darstellung ist mit zumindest einem Anschluss der zweiten 3D-Darstellung verbunden und zumindest ein Anschluss des ersten Blockschaltelements ist mit einem Anschluss des zweiten Blockschaltelements verbunden. Das Verbinden des Anschlusses oder der Anschlüsse erfolgt dabei automatisch beim Platzieren der 3D-Darstellung und/oder des Blockschaltelements.

In mindestens einem Speicher sind die Beziehung der ersten 3D-Darstellung mit dem mindestens einen ersten Blockschaltelement und die Beziehung der zweiten 3D-Darstellung mit dem mindestens einen zweiten Blockschaltelement gespeichert.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt einen Arbeitsraum der grafischen Benutzeroberfläche;
- Fig. 2: zeigt eine Zeichenebene der grafischen Benutzeroberfläche;
- Fig. 3: zeigt den Arbeitsraum mit einer 3D-Darstellung des Geometriemodells einer Anlagekomponente;
- Fig. 4: zeigt die Zeichenebene mit einem zu der 3D-Darstellung aus Fig. 3 gehö-renden Blockschaltelement;
- Fig. 5: zeigt die Zeichenebene mit Unterelementen des Blockschaltelements aus Fig. 4;
- Fig. 6: zeigt ein Dialogfenster mit Geometriedaten der 3D-Darstellung;
- Fig. 7: zeigt den Arbeitsraum mit der 3D-Darstellung aus Fig. 3 mit der 3D-Dar-stellung einer Werkstückquelle;
- Fig. 8: zeigt die Zeichenebene mit zu den 3D-Darstellungen aus Fig. 4 gehörenden Blockschaltelementen;
- Fig. 9: zeigt die Zeichenebene aus Fig. 5 mit zusätzlich verbundenem Eingang;
- Fig. 10: zeigt den Arbeitsraum mit 3D-Darstellungen von mehreren Anlagekomponenten;
- Fig. 11: zeigt die Zeichenebene mit zu den 3D-Darstellungen aus Fig. 10 gehörenden Blockschaltelementen;
- Fig. 12: zeigt den Arbeitsraum mit Anlagekomponenten einer Produktionsanlage in 3D-Darstellung;
- Fig. 13: zeigt den Arbeitsraum aus Fig. 12 mit einem geöffneten Dialogfenster;
- Fig. 14: zeigt eine Simulation der Produktionsanlage aus Fig. 12;
- Fig. 15: zeigt ein erfindungsgemäßes Verfahren.

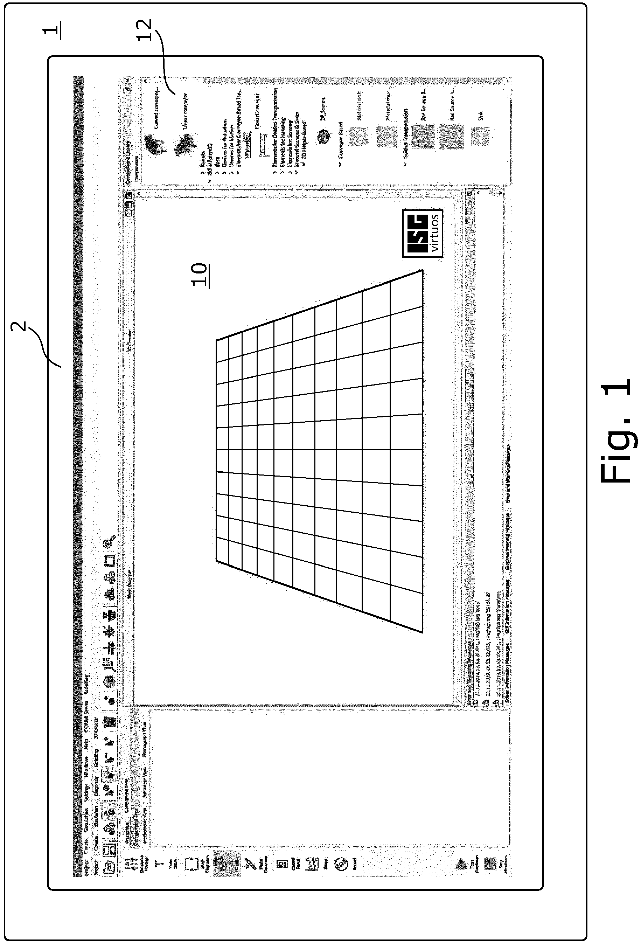

Fig. 1 zeigt eine Vorrichtung 1 zur Simulation einer Anlage mit mehreren Anlagenkomponenten. Bei der Anlage handelt es sich insbesondere um eine reale Produktionsanlage. Die Vorrichtung weist eine grafische Benutzeroberfläche 2 auf. In einen Arbeitsraum 10 können Elemente aus einer Elementebibliothek 12 eingefügt werden. Die Elementebibliothek umfasst hier 3D-Darstellungen von Anlagekomponenten einer realen Anlage. In Fig. 1 ist der Arbeitsraum 10 noch leer.

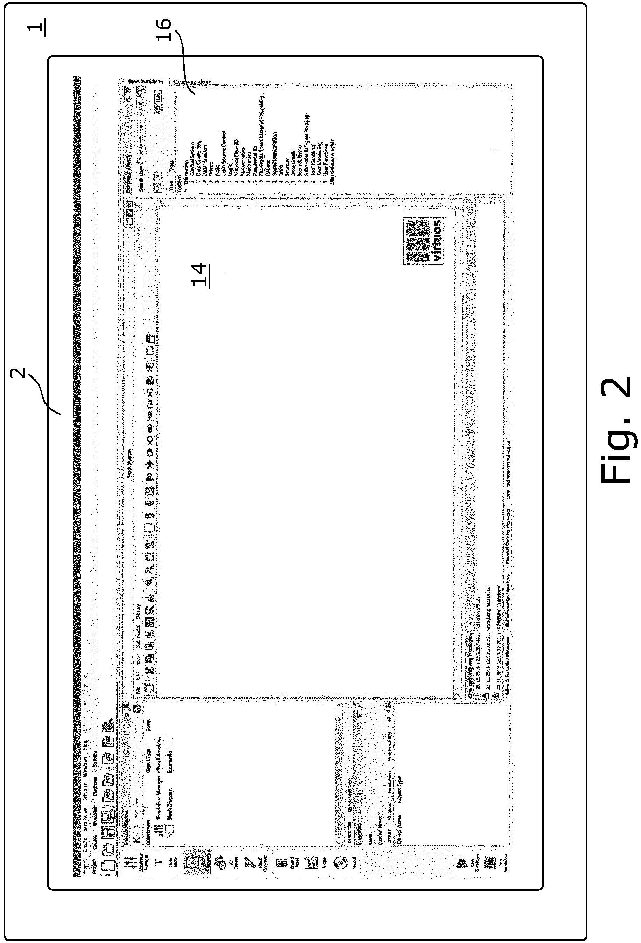

Fig. 2 zeigt eine Zeichenebene 14 der grafischen Benutzeroberfläche 2. In Fig. 2 ist die Zeichenebene 14 noch leer. In einer Elementebibliothek 16 sind Elemente aufgelistet, die in der Zeichenebene 14 dargestellt werden können. Die Elemente der Elementebibliothek sind hier Blockschaltelemente, die das Verhalten von realen Anlagenkomponenten beschreiben.

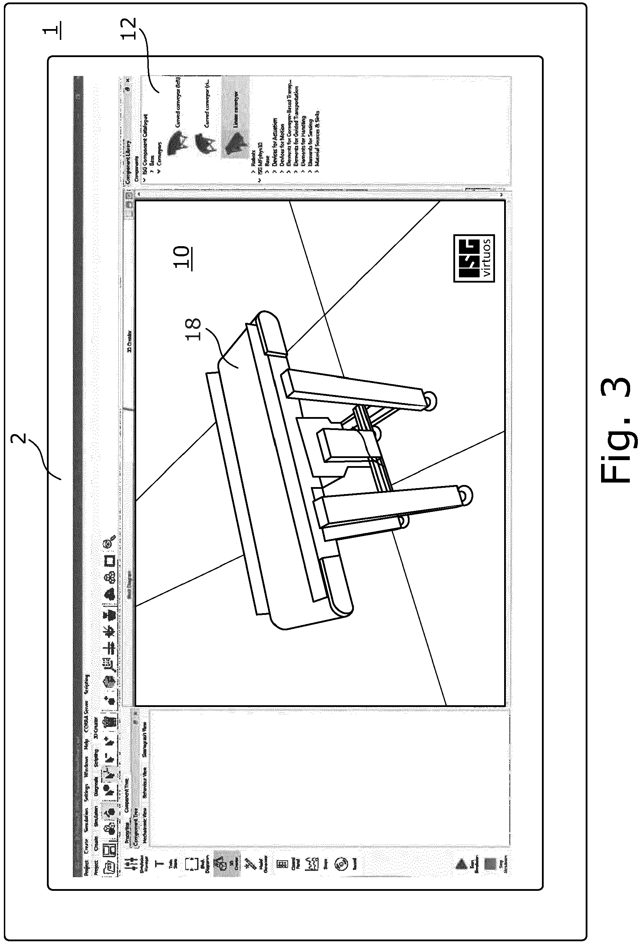

Fig. 3 zeigt den Arbeitsraum 10, in den eine erste 3D-Darstellung 18, nämlich die eines geraden Förderbandes, eingefügt wurde. Das Einfügen von 3D-Darstellungen aus der Elementebibliothek 12 in den Arbeitsraum 10 kann beispielsweise durch Drag & Drop mittels eines Zeigeinstrumentes wie einer Maus erfolgen.

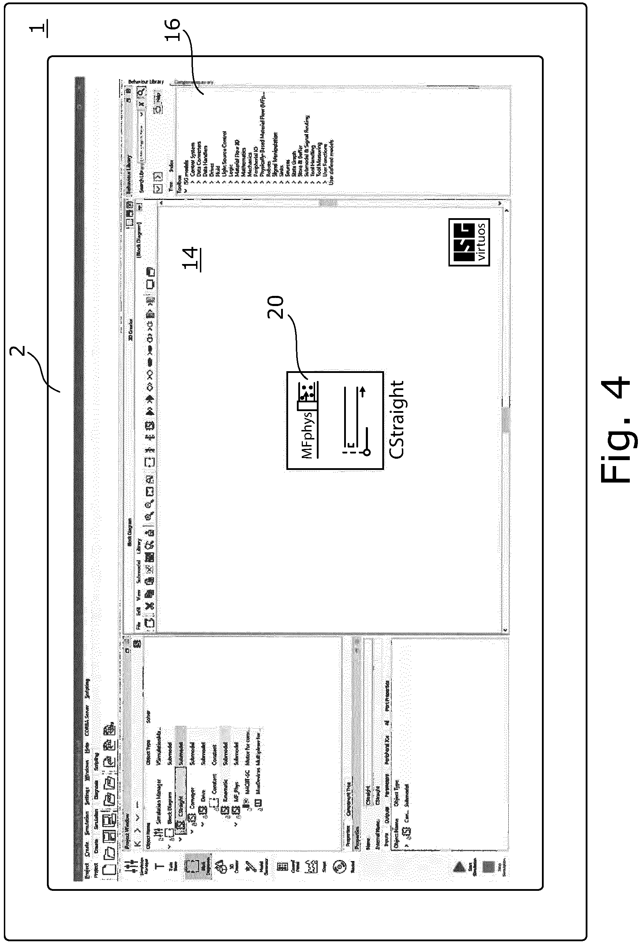

In Fig. 4 ist ein Blockschaltelement 20 in der Zeichenebene 14 dargestellt. Das Blockschaltelement 20 repräsentiert die 3D-Darstellung 18 des geraden Förderbandes aus Fig. 3. Das Blockschaltelement 20 enthält das Verhalten des geraden Förderbandes, das durch die 3D-Darstellung 18 im Arbeitsraum 10 dargestellt wird. In diesem Beispiel wurde das Blockschaltelement 20 beim Platzieren der 3D-Darstellung 18 im Arbeitsraum 10 automatisch in der Zeichenebene 14 platziert.

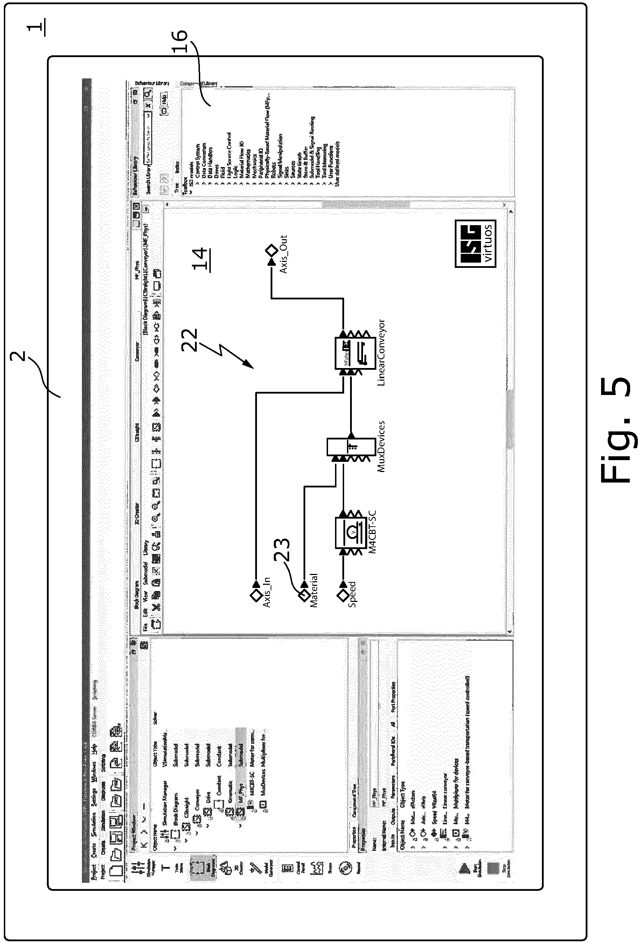

In Fig. 5 ist eine Übersicht 22 der Unterelemente des Blockschaltelements 20 in der Zeichenebene 14 dargestellt. Die Unterelemente des Blockschaltelements 20 unterteilen das Verhalten des Blockschaltelements 20 in kleinere Einheiten. Dargestellt sind auch die Eingänge und Ausgänge des Blockschaltelements 20 in der Übersicht 22. Der Eingang 23 wird beispielsweise durch eine Raute dargestellt, die nicht mit Farbe gefüllt ist. Dies bedeutet, dass der Eingang nicht verbunden ist.

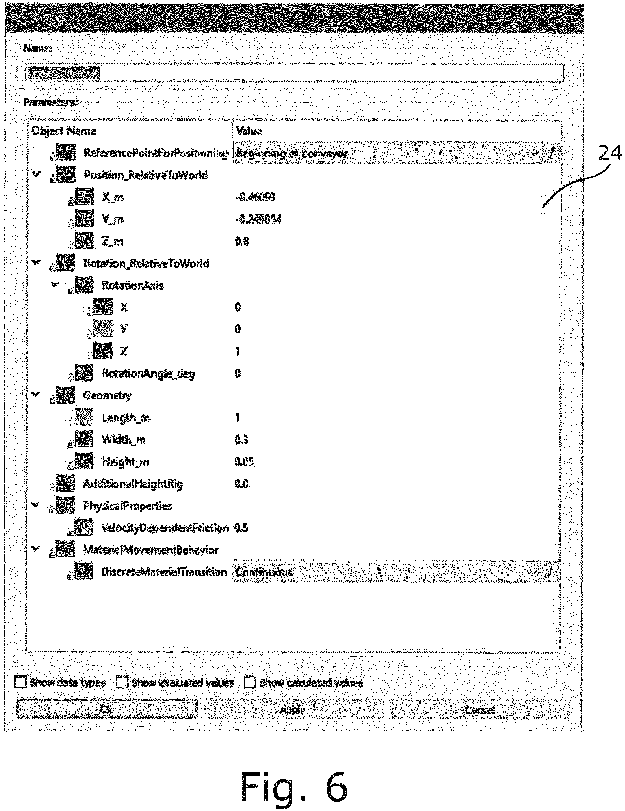

Fig. 6 zeigt beispielhaft ein Dialogfenster 24 mit Geometriedaten der 3D-Darstellung 18. Die Geometriedaten sind durch einen Nutzer editierbar. Bei Änderung der Geometriedaten ändert sich auch die dazugehörige 3D-Darstellung 18.

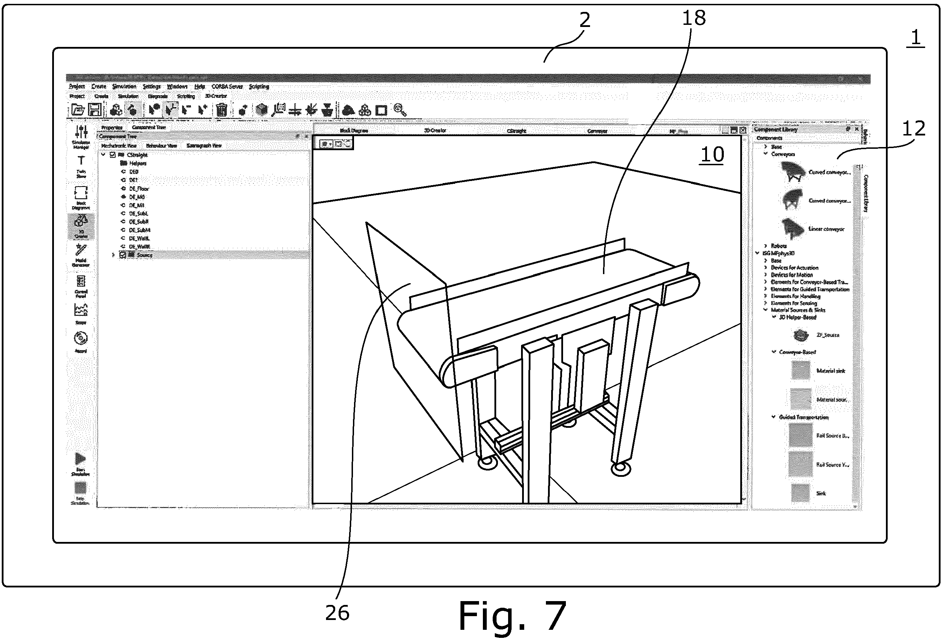

In Fig. 7 wurde die Darstellung aus Fig. 3 durch eine 3D-Darstellung 26, einer Werkstückquelle, z. B. durch Drag & Drop ergänzt. Zur Erleichterung des Prozesses kann optional mittels einer "Snap"-Funktion, die Platzierung der 3D-Darstellung 26 dahingehend eingeschränkt werden, dass sich eine solche 3D-Darstellung - falls sich bereits eine 3D-Darstellung 18 im Arbeitsraum 10 befindet - nur direkt benachbart zu der bereits im Arbeitsraum 10 befindlichen 3D-Darstellung platzieren lässt. Daraufhin werden die 3D-Darstellungen 18 und 26 im Arbeitsraum 10 geometrisch und logisch verbunden.

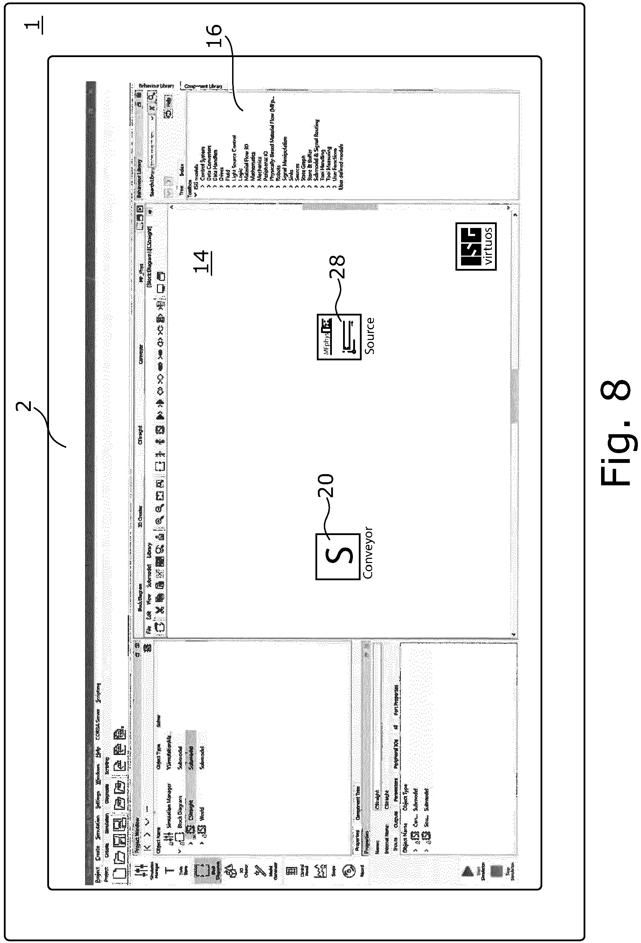

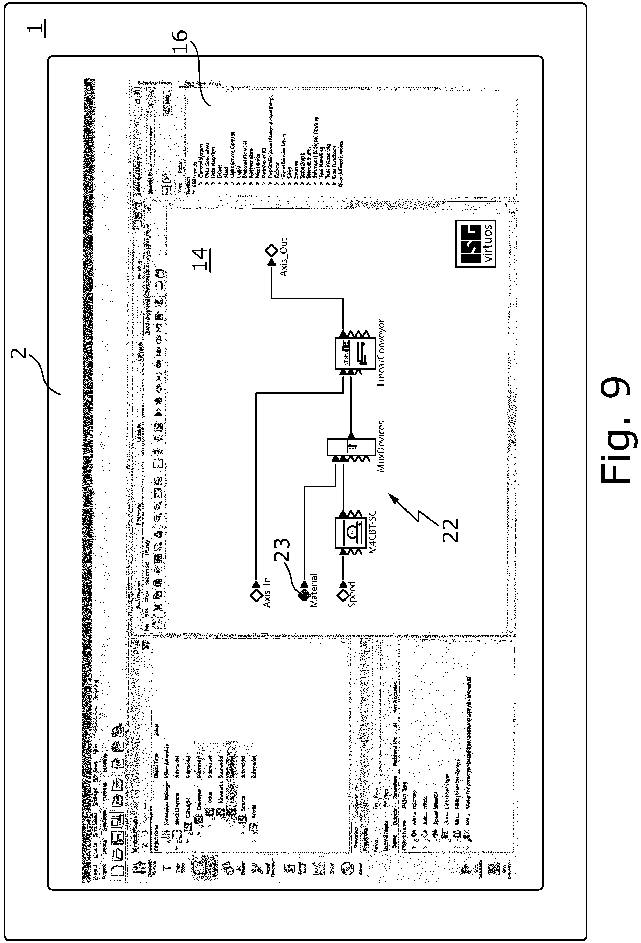

Fig. 8 zeigt die dazugehörigen Blockschaltelemente 20 und 28 in der Zeichenebene 14. Das Blockschaltelement 20 gehört zur 3D-Darstellung 18. Das Blockschaltelement 28 gehört zur 3D-Darstellung 26. Die beiden Blockschaltelemente 20 und 28 sind verbunden. Dies ist in der Zeichenebene 14 von Fig. 8 nicht durch Verbindungslinien dargestellt, sondern in Fig. 9 erkennbar. Hier ist der Eingang 23 der Übersicht 22 des Blockschaltelementes nun als ausgefüllte Raute dargestellt. Dies bedeutet in dieser Darstellung, dass der Eingang 23 nun verbunden ist.

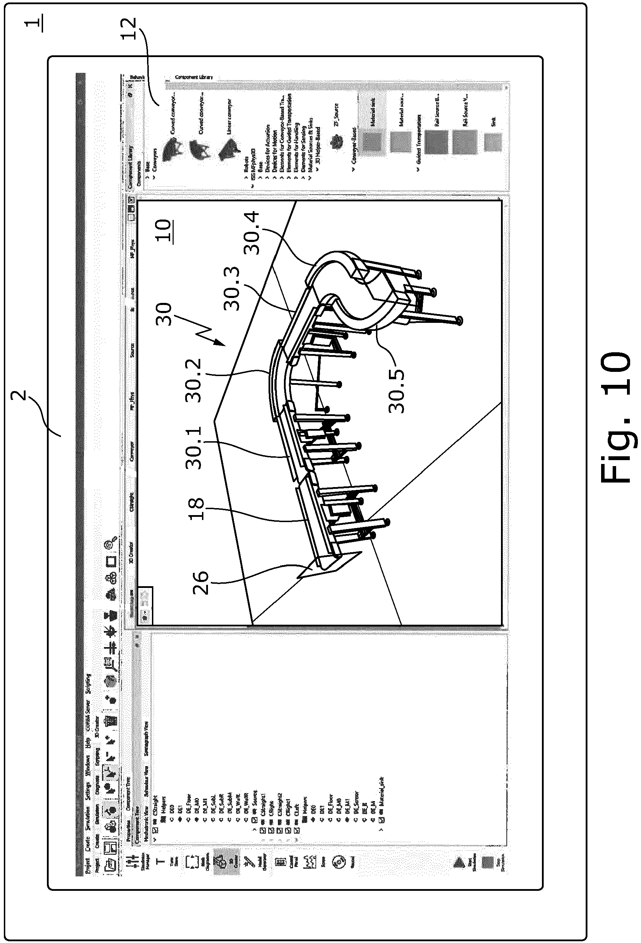

In Fig. 10 ist ein weiteres Beispiel einer Darstellung 30 einer realen Anlage gezeigt. Die 3D-Darstellungen 18 und 26 aus Fig. 7 wurden um weitere 3D-Darstellungen 30.1, 30.2, 30.3, 30.4 und 30.5 ergänzt. Die weiteren 3D-Darstellungen 30.1, 30.2, 30.3, 30.4 und 30.5 geben weitere reale Anlagekomponenten mit ihren geometrischen Ausmaßen im Arbeitsraum 10 wieder. Die weiteren 3D-Darstellungen 30.1, 30.2, 30.3, 30.4 und 30.5 können zum Einfügen in den Arbeitsraum 10 der Elementebibliothek 12 mittels Drag & Drop entnommen werden um im Arbeitsraum 10 platziert werden. Das Aneinanderfügen kann beispielsweise mittels einer "Snap"-Funktion erfolgen. Die 3D-Darstellung 30.1 stellt ein weiteres gerades Förderband dar. Die 3D-Darstellung 30.2 stellt ein Förderband mit Rechtskurve dar. Die 3D-Darstellung 30.3 stellt ein weiteres gerades Förderband dar. Die 3D-Darstellung 30.4 stellt ein Förderband mit Rechtskurve dar. Die 3D-Darstellung 30.5 stellt ein Förderband mit Linkskurve dar.

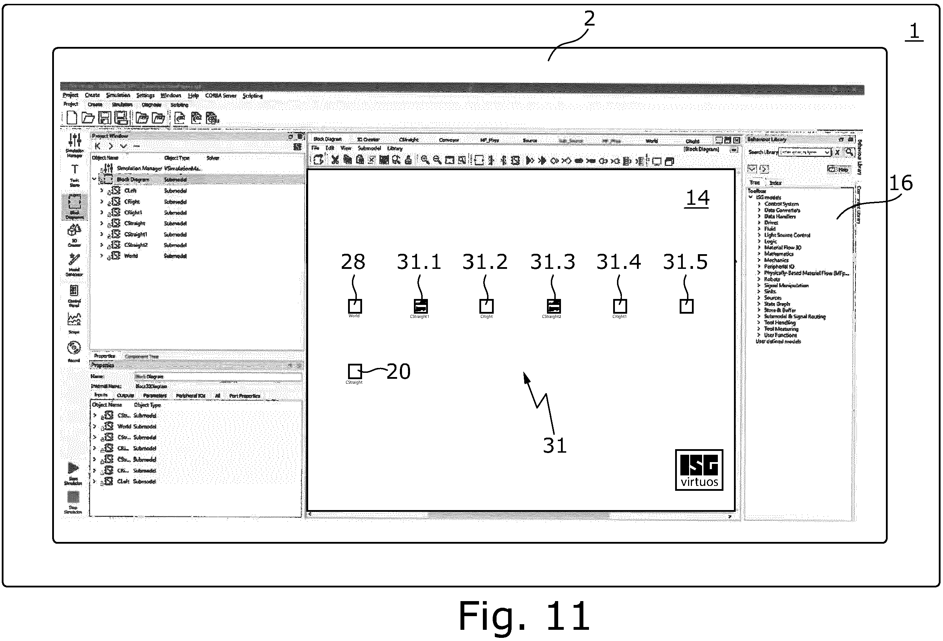

In Fig. 11 ist das die Darstellung 30 repräsentierende Blockschaltbild 31 in der Zeichenebene 14 dargestellt. Zu jeder 3D-Darstellung gibt es ein diese 3D-Darstellung 18, 26, 30.1, 30.2, 30.3, 30.4, 30.5 repräsentierendes Blockschaltelement 20, 28, 31.1, 31.2, 31.3, 31.4, 31.5. Hierbei repräsentiert das Blockschaltelement 20 die 3D-Darstellung 18 und das Blockschaltelement 28 die 3D-Darstellung 26. Das Blockschaltelement 31.1. repräsentiert die 3D-Darstellung 30.1. Das Blockschaltelement 31.2. repräsentiert die 3D-Darstellung 30.2. Das Blockschaltelement 31.3. repräsentiert die 3D-Darstellung 30.3. Das Blockschaltelement 31.4. repräsentiert die 3D-Darstellung 30.4. Das Blockschaltelement 31.5. repräsentiert die 3D-Darstellung 30.5. Die Blockschaltelemente 20, 28, 31.1, 31.2, 31.3, 31.4, 31.5 sind untereinander verbunden. Dies ist in Fig. 11 nicht durch Linien dargestellt, sondern kann analog zu Fig. 5 anhand von ausgefüllten Eingängen oder Ausgängen bei einer Darstellung von Unterelementen der Blockschaltelemente 20, 28, 31.1, 31.2, 31.3, 31.4, 31.5 dargestellt werden.

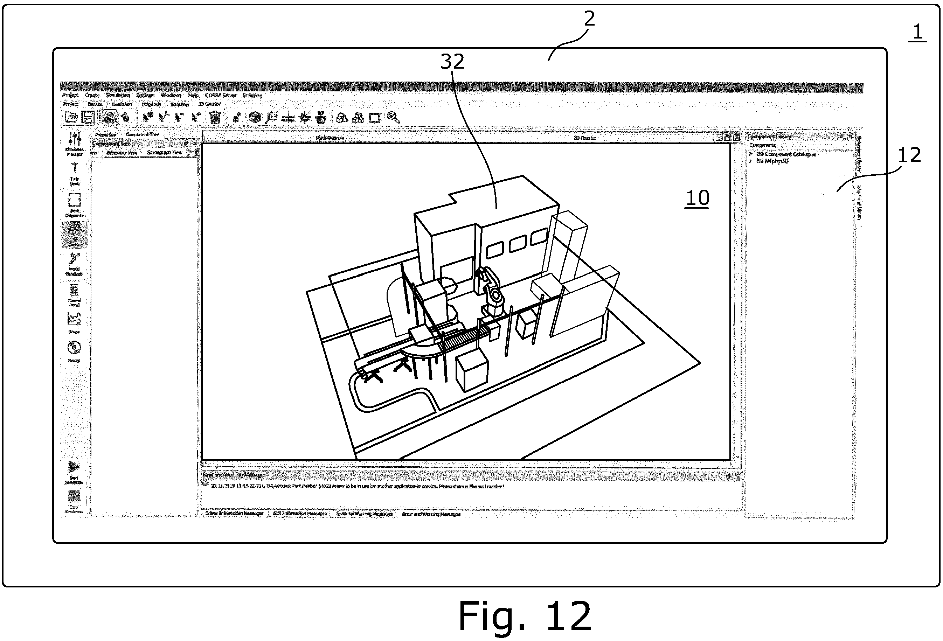

Fig. 12 zeigt eine weitere Darstellung 32 einer realen Anlage. Die Darstellung 32 ist aus 3D-Darstellungen aufgebaut. Es ist möglich, dass noch nicht allen 3D-Darstellungen, die in der Darstellung 32 enthalten sind, Blockschaltelemente zugewiesen sind.

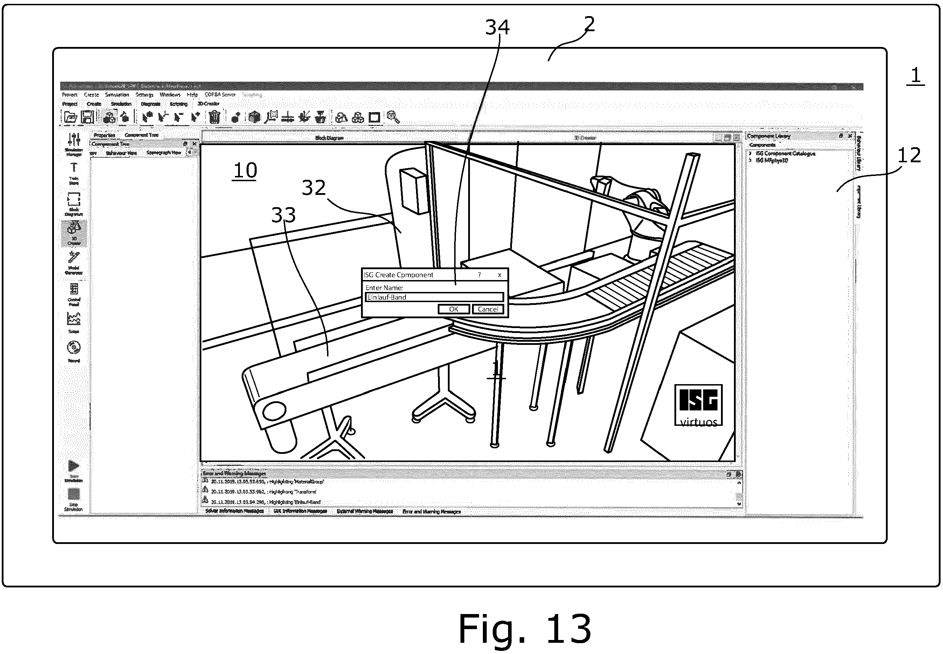

In Fig. 13 ist gezeigt, wie einer 3D-Darstellung 33 der Darstellung 32, nämlich dem geraden Förderband, mittels eines Dialogfensters 34 ein Blockschaltelement manuell zugewiesen werden kann. Dieses Herstellen einer Beziehung zwischen 3D-Darstellung 33 und einem Blockschaltbild ist eine mögliche Ausführungsform der Erfindung. Sie kann beispielsweise Anwendung finden, wenn mit einer 3D-Darstellung im Speicher noch keine Blockschaltelemente verbunden sind oder wenn der Nutzer einer 3D-Darstellung ein weiteres mögliches Blockschaltelement zuweisen will. Dies erhöht die Flexibilität des Verfahrens.

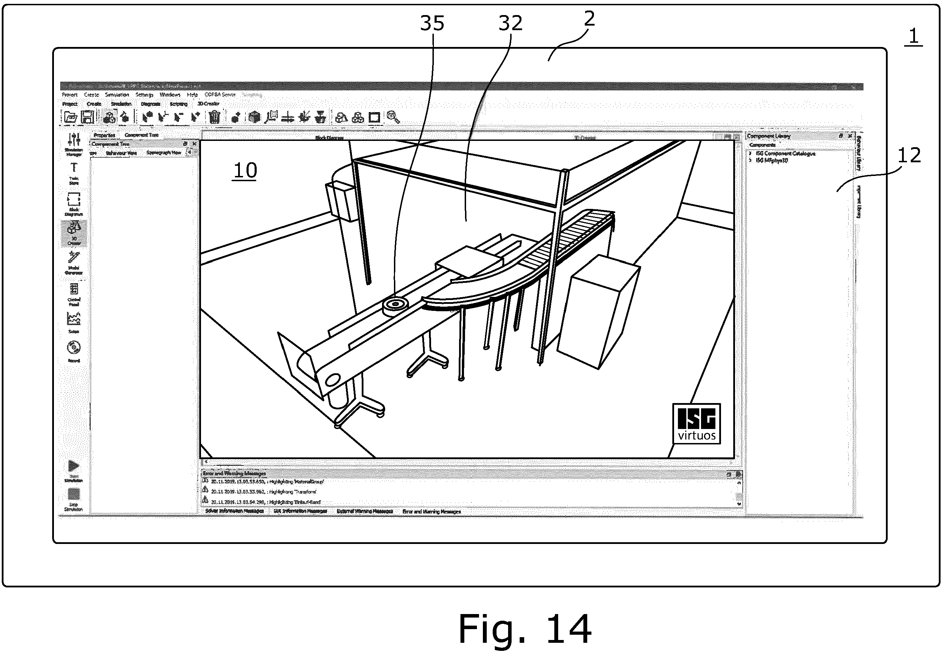

In Fig. 14 ist eine Simulation der Anlage 32 auf der Vorrichtung 1 dargestellt. Es ist zu sehen, wie Werksstück 35 über das Förderband befördert wird. Der weitere Verlauf der Verarbeitung in der Anlage 32 kann dann in der Simulation beobachtet werden. Dies kann insbesondere zu Software-in-the-Loop und Hardware-in-the-Loop Simulationen und zur sukzessiven Inbetriebnahme von realen Anlagen genutzt werden, bei der virtuelle Komponenten bestehend aus 3D-Darstellung und Blockschaltbild, sukzessive durch reale Komponenten ersetzt werden.

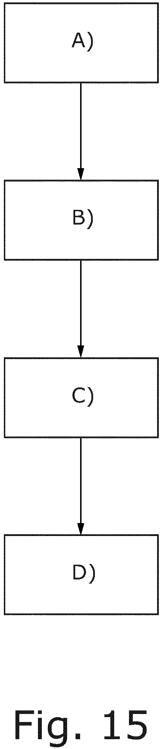

Fig. 15 zeigt ein Verfahren zur Erstellung eines Blockschaltbildes aus einzelnen Blockschaltelementen mit den Verfahrensschritten:
A) Platzieren einer ersten 3D-Darstellung 18 einer ersten realen Anlagenkomponente in einem Arbeitsraum 10,
B) Platzieren eines ersten Blockschaltelements 20 in einer Zeichenebene 14, wobei das erste Blockschaltelement 20 die erste 3D-Darstellung 28 repräsentiert;
C) Platzieren einer zweiten 3D-Darstellung 26, 30.1 einer zweiten realen Anlagenkomponente im Arbeitsraum 10,
D) Platzieren eines zweiten Blockschaltelements 28, 31.1 in der Zeichenebene 14, wobei das zweite Blockschaltelement 28, 31.1 die zweite 3D-Darstellung 26, 30.1 repräsentiert.

Bei der Erstellung eines Blockschaltbildes wird ein Anschluss der ersten 3D-Darstellung 18 mit zumindest einem Anschluss einer zweiten 3D-Darstellung 26, 30.1 verbunden und zumindest ein Anschluss eines ersten Blockschaltelements 20 wird mit einem Anschluss eines zweiten Blockschaltelements 28, 31.1 verbunden. Die Blockschaltelemente 20, 28, 31.1 werden bevorzugt automatisch platziert. Es ist auch möglich, die Blockschaltelemente 20, 18, 31.1 manuell mit 3D-Darstellungen zu verbinden.

## Patentansprüche

1. Verfahren zur Erstellung eines Blockschaltbildes aus einzelnen Blockschaltelementen mit den Verfahrensschritten:
A) Platzieren einer ersten 3D-Darstellung (18) einer ersten realen Anlagenkomponente in einem Arbeitsraum (10),
B) Platzieren zumindest eines ersten Blockschaltelementes (20) in einer Zeichenebene (14), wobei das zumindest eine erste Blockschaltelement (20) die erste 3D-Darstellung (28) repräsentiert;
C) Platzieren einer zweiten 3D-Darstellung (26, 30.1) einer zweiten realen Anlagenkomponente im Arbeitsraum (10),
D) Platzieren zumindest eines zweiten Blockschaltelementes (28, 31.1) in der Zeichenebene (14), wobei das zumindest eine zweite Blockschaltelement (28, 31.1) die zweite 3D-Darstellung (26, 30.1) repräsentiert;
sodass ein Anschluss der ersten 3D-Darstellung (18) mit zumindest einem Anschluss der zweiten 3D-Darstellung (26, 30.1) verbunden wird und zumindest ein Anschluss des zumindest einen ersten Blockschaltelements (20) mit einem Anschluss des zumindest einen zweiten Blockschaltelements (28, 31.1) verbunden wird,
wobei das Platzieren des zumindest einen ersten Blockschaltelements und / oder das Platzieren des zumindest einen zweiten Blockschaltelements automatisch erfolgt,
wobei vor dem Platzieren des zumindest einen ersten Blockschaltelements (20) das zumindest eine erste Blockschaltelement (20) ausgewählt wird, wobei die Auswahl auf einer in einem Speicher gespeicherten Beziehung zwischen der ersten 3D-Darstellung (18) und dem zumindest einen ersten Blockschaltelement (20) basiert,
wobei vor dem Platzieren des zumindest einen zweiten Blockschaltelements (28, 31.1) das zumindest eine zweite Blockschaltelement ausgewählt wird (28, 31.1), wobei die Auswahl auf einer in einem Speicher gespeicherten Beziehung zwischen der zweiten 3D-Darstellung (26, 30.1) und dem zumindest einen zweiten Blockschaltelement (28, 31.1) basiert.

2. Verfahren nach Anspruch 1, bei dem das Verbinden der ersten 3D-Darstellung (18) mit der zweiten 3D-Darstellung (26, 30.1) durch einen Benutzer mittels Drag & Drop-Funktion ausführbar ist.

3. Verfahren nach Anspruch 2, bei dem das Verbinden der ersten 3D-Darstellung (18) mit der zweiten 3D-Darstellung (26, 30.1) durch eine Snap-Funktion ausführbar ist.

4. Verfahren nach einem der vorhergehenden Ansprüche, **dadurch gekennzeichnet, dass** die Beziehung zwischen der ersten 3D-Darstellung (18) und dem zumindest einen ersten Blockschaltelement (20) und/oder der zweiten 3D-Darstellung (26, 30.1) und dem zumindest einen zweiten Blockschaltelement (28, 31.1) durch einen Nutzer vorgebbar ist.

5. Verfahren nach einem der vorhergehenden Ansprüche, **dadurch gekennzeichnet, dass** das Platzieren der ersten und/oder zweiten 3D-Darstellung durch den Import von geometrischen Daten aus einem Konstruktionssystem erfolgt.

6. Vorrichtung (1) zur Simulation einer Anlage mit mehreren Anlagenkomponenten, wobei die Vorrichtung folgendes aufweist:
• Eine erste 3D-Darstellung (18) einer ersten realen Anlagenkomponente in einem Arbeitsraum (10) und zumindest ein erstes Blockschaltelement (20) in einer Zeichenebene (14), wobei das zumindest eine erste Blockschaltelement (20) die erste 3D-Darstellung (18) repräsentiert;
• Eine zweite 3D-Darstellung (26, 30.1) einer zweiten realen Anlagenkomponente im Arbeitsraum (10) und zumindest ein zweites Blockschaltelement (28, 31.1) in der Zeichenebene (14), wobei das zumindest eine zweite Blockschaltelement (28, 31.1) die zweite 3D-Darstellung (26, 30.1) repräsentiert;
wobei zumindest ein Anschluss der ersten 3D-Darstellung (18) mit zumindest einem Anschluss der zweiten 3D-Darstellung (26, 30.1) verbunden ist und ein Anschluss des ersten Blockschaltelements (20) mit einem Anschluss des zweiten Blockschaltelements (28, 31.1) verbunden ist, wobei die Vorrichtung einen Speicher aufweist, in dem eine Beziehung zwischen der ersten 3D-Darstellung (18) und dem zumindest einen ersten Blockschaltelement (20) gespeichert ist und in dem eine Beziehung zwischen der zweiten 3D-Darstellung (26, 30.1) und dem zumindest einen zweiten Blockschaltelement (28, 31.1) gespeichert ist.
